# EUROPÄISCHE PATENTSCHRIFT

(11) **EP 1 255 607 B1**
(45) Veröffentlichungstag und Bekanntmachung des Hinweises auf die Patenterteilung: **18.08.2004**
(21) Anmeldenummer: 01911571.6
(22) Anmeldetag: 01.02.2001
(51) Int. Cl.: B01F 7/00, C09D 5/02

(54) **VERFAHREN ZUR HERSTELLUNG VON WÄSSRIGEN PULVERLACKDISPERSIONEN (PULVERSLURRIES) UND VERWENDUNG DAVON**
METHOD FOR PRODUCING AQUEOUS POWDER COATING DISPERSIONS (POWDER SLURRIES), AND THE USE OF SAME
PROCEDE DE FABRICATION DE DISPERSIONS DE REVETEMENT PULVERULENTES AQUEUSES (SUSPENSIONS PULVERULENTES) ET EMPLOI DE CES DISPERSIONS

(30) Priorität: 15.02.2000 DE 10006673
(43) Veröffentlichungstag der Anmeldung: 13.11.2002
(73) Patentinhaber: BASF Coatings Aktiengesellschaft, 48165 Münster (DE)
(72) Erfinder: BENDIX, Maximilian, 59302 Oelde (DE); STANG, Michael, 67069 Ludwigshafen (DE); WOLF, Heiko, 67227 Frankenthal (DE); POLKE, Reinhard, 67112 Mutterstadt (DE)
(74) Vertreter: Fitzner, Uwe, Dr.
(86) Internationale Anmeldenummer: PCT/EP2001/001080
(87) Internationale Veröffentlichungsnummer: WO 2001/060506

(56) Entgegenhaltungen:
- EP-A- 0 648 537
- DE-A- 19 652 813

## Beschreibung

Die vorliegende Erfindung betrifft neue wäßrige Pulverlackdispersionen oder Pulverslurries. Außerdem betrifft die vorliegende Erfindung ein neues Verfahren zur Herstellung von Pulverslurries. Des weiteren betrifft die vorliegende Erfindung die Verwendung der neuen Pulverslurries für die Herstellung ein- oder mehrschichtige farb- und/oder effektgebender Beschichtungen für grundierte und ungrundierte Substrate.

Bei diesen Pulverslurries handelt es sich um stabile wäßrige Dispersionen von Pulverlacken. Die ersten Pulverslurries wurden durch Suspendieren von Pulverlacken in Wasser hergestellt. Die Partikelgröße der Pulverlackharzpartikel betrug hierbei 0.5-80 µm. Es konnten Lackformulierungen mit einem Feststoffgehalt im Bereich von 20-70 % realisiert werden. Im Gegensatz zu Wasserlacken ist bei Pulverslurries ein Zusatz organischer Lösemittel als Verlaufmittel nicht erforderlich, da sich die Lackpartikel nach der Applikation des Lackes durch die wäßrige Phase gut entspannen können. Dies ist möglich, da zu diesem Zeitpunkt die Harzpartikel in einem relativ niedrigviskosen Medium vorliegen und so über eine ausreichende Mobilität verfügen. Beim sich anschließenden Einbrennprozeß reagieren die Bindemittel- und Vernetzungsmittelpartikel miteinander, so daß diese Mobilität mit zunehmendem Netzwerkaufbau verloren geht. Nach der Vortrocknung einer Pulverslurry kann diese vereinfacht wie ein Pulverlack betrachtet werden. Hinsichtlich der Partikelgröße der Harze unterscheiden sich die Systeme jedoch deutlich voneinander, was sich bei der Applikation von Pulverslurries in einer geringeren Schichtdicke (20-45 µm) des eingebrannten Lackes widerspiegelt. Der Vorteil von Pulverlacken, nämlich die zeitliche Trennung vom Schmelzen der Harzpartikel zu einem glatten Film und die nachfolgende Reaktion zu einem geschlossenem Netzwerk findet sich somit auch in Pulverslurry-Systemen wieder.

Pulverlacke in Form wäßriger Dispersionen, die im wesentlichen frei von organischen Lösemitteln sind und sich mit Flüssiglacktechnologien verarbeiten lassen, sowie Verfahren zu ihrer Herstellung durch Schmelzeemulgierung sind aus der deutschen Offenlegungsschrift DE 196 52 813 A 1 bekannt. Bei diesem bekannten Verfahren werden die Bindemittel, die Vernetzungsmittel sowie gegebenenfalls weitere Zusatzstoffe oder Additive als viskose Harzschmelzen in die Dispergieraggregate eingespeist und dort in flüssiger Phase fein dispergiert. Die Bestandteile können aber auch vor ihrer Dispergierung in dem Dispergieraggregat im flüssigen Zustand zunächst homogen miteinander vermischt und dann in einen zweiten Schritt in flüssiger Phase fein dispergiert werden. Anschließend wird die resultierende Emulsion durch Abkühlen in eine Suspension mit festen, fein verteilten Partikeln überführt. Der wesentliche Vorteil dieses Verfahrens ist, daß auf aufwendige und die Dispersionen u. U. schädigende Mahlverfahren, mit denen die erforderliche Teilchengröße eingestellt werden muß, verzichtet werden kann. Außerdem können mit Hilfe der Schmelzeemulgierung feinteiligere Pulverlackdispersionen hergestellt werden als nach den Mahlverfahren.

Aufgabe der vorliegenden Erfindung ist es, eine neue wäßrige Pulverlackdispersion (Pulverslurry) zu finden, die die bekannten Vorteile von Pulverslurries aufweist und die durch Schmelzeemulgierung mit niedrigerem Energieeintrag hergestellt werden kann.

Demgemäß ist ein Verfahren zur Herstellung einer wäßriger Pulverlackdispersion (Pulverslurry) offenbart, bei dem man:
(1) mindestens ein Bindemittel in flüssigem Zustand in einem Zahnkranz-Dispergieraggregat in einem wäßrigen Medium emulgiert,
(2) die resultierende Emulsion abkühlen läßt, so daß sich eine Suspension bildet, und
(3) die Suspension filtriert,
und die dadurch gekennzeichnet ist, daß das Zahnkranz-Dispergieraggregat mindestens eine zylindrische Anordnung mindestens zweier auf Haltern sitzender, sich umschließender, relativ zueinander gegenläufig rotierbarer Zerkleinerungsorgankränze (Stator und Rotor) aufweist, wobei der sich durch die Relativbewegung zwischen dem Stator und Rotor ergebende Arbeitspalt Wände aufweist, die nicht-parallel zueinander verlaufen.

Im folgenden wird die neue wäßriger Pulverlackdispersion (Pulverslurry) als "erfindungsgemäße Pulverslurry" bezeichnet.

Weitere erfindungsgemäße Gegenstände ergeben sich aus der Beschreibung.

Die erfindungsgemäße Pulverslurry ist physikalisch härtend.

Im Rahmen der vorliegenden Erfindung bedeutet der Begriff "physikalische Härtung" die Härtung einer Schicht aus Partikeln der erfindungsgemäßen Pulverslurry durch Verfilmung, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Die erfindungsgemäße Pulverslurry ist thermisch härtbar. Hierbei kann sie selbstvernetzend oder fremdvernetzend sein.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvemetzend werden dagegen solche Beschichtungsstoffe, bezeichnet, worin die eine Art der komplementären reaktiven funktionellen Gruppen in dem Bindemittel und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Die erfindungsgemäße Pulverslurry ist mit aktinischer Strahlung härtbar.

Hierbei erfolgt die Härtung über Gruppen die Bindungen enthalten, die mit aktinischer Strahlung aktivierbar sind. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Die erfindungsgemäße Pulverslurry ist thermisch und mit aktinischer Strahlung härtbar.

Werden die thermische und die Härtung mit aktinischem Licht bei einer Pulverslurry gemeinsam angewandt, spricht man auch von "Dual Cure" und "Dual-Cure-Pulverslurry".

Die erfindungsgemäße Pulverslurry ist vorzugsweise ein Einkomponenten(1K)-System.

Im Rahmen der vorliegenden Erfindung ist unter einem Einkomponenten(1K)-System eine thermisch oder thermisch und mit aktinischer Strahlung härtende Pulverslurry zu verstehen, bei der das Bindemittel und das Vernetzungsmittel nebeneinander in den Partikeln vorliegen. Voraussetzung hierfür ist, daß die beiden Bestandteile erst bei höheren Temperaturen und/oder bei Bestrahlen mit aktinischer Strahlung miteinander vernetzen.

Die erfindungsgemäße Pulverslurry ist wäßrig, d. h., die in ihr enthaltenen festen Partikel sind in einem wäßrigen Medium dispergiert.

Im Rahmen der vorliegenden Erfindung ist unter einem wäßrigen Medium reines Wasser zu verstehen oder Wasser, das niedermolekulare, oligomere oder polymere, flüssige, feste oder gasförmige, anorganische oder organische Verbindungen, wie beispielsweise die nachstehend beschriebenen Zusatzstoffe, insbesondere aber Emulgatoren und/oder Dispergierhilfsmittel, gelöst oder dispergiert enthält. Wesentlich ist hierbei, daß diese Verbindungen nicht die wäßrige Natur des Mediums zerstören und/oder bei der Härtung der erfindungsgemäßen Pulverslurry zu organischen Emissionen führen.

Der Gehalt der erfindungsgemäßen Pulverslurry an festen Partikeln kann sehr breit variieren und richtet sich nach den Erfordernissen des Einzelfalls. Vorzugsweise liegt er bei 5,0 bis 60, bevorzugt 10 bis 55, besonders bevorzugt 15 bis 50, ganz besonders bevorzugt 20 bis 45 und insbesondere 25 bis 40 Gew.-%, jeweils bezogen auf die Gesamtmenge der erfindungsgemäßen Pulverslurry.

Ebenso kann die Größe der Partikel der erfindungsgemäßen Pulverslurry breit variieren. Vorzugsweise liegt sie zwischen 0,1 und 100, bevorzugt 0,2 und 80, besonders bevorzugt 0,3 und 60, ganz besonders bevorzugt 0,4 und 40 und insbesondere 0,5 bis 20 µm. Für ganz besonders anspruchsvolle Verwendungszwecke wie die Kraftfahrzeugerstlackierung sind Partikelgrößen von 3 bis 10 µm von ganz besonderem Vorteil.

Der wesentliche Bestandteil der Partikel der erfindungsgemäßen Pulverslurry ist mindestens ein Bindemittel, das für sich selbst gesehen, physikalisch, thermisch, mit aktinischer Strahlung und thermisch und mit aktinischer Strahlung härtbar ist. Im allgemein ist es in den Partikeln in einer Menge von 5,0 bis 100, vorzugsweise 6,0 bis 90, bevorzugt 7,0 bis 85, besonders bevorzugt 8,0 bis 80, ganz besonders bevorzugt 9,0 bis 75 und insbesondere 10 bis 70 Gew.-%, jeweils bezogen auf die Gesamtmenge der Partikel, enthalten.

Vorzugsweise weist das Bindemittel eine Glasübergangstemperatur oberhalb der Raumtemperatur, bevorzugt von 30 bis 80, besonders bevorzugt von 40 bis 70, ganz besonders bevorzugt von 40 bis 60 und insbesondere etwa 50°C auf (gemessen mit Hilfe der Differential Scanning Calorimetrie (DSC)).

Das Molekulargewicht des Bindemittels kann sehr breit variieren. Erfindungsgemäß ist es bevorzugt, das Molekulargewicht des Bindemittels nicht allzu hoch zu wählen, weil ansonsten Probleme bei der Verfilmung auftreten können. Vorzugsweise liegt das Molekulargewicht bei 1.000 bis 100.000, bevorzugt 1.000 bis 50.000, besonders bevorzugt 1.000 bis 30.000, ganz besonders bevorzugt 1.200 bis 20.000 und insbesondere 1.500 bis 10.000.

Beispiele geeigneter Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, Seiten 463 und 464, »Polykondensate«, »Polykondensation« und »Polykondensationsharze«, sowie Seiten 73 und 74, »Bindemittel«, verwiesen.

Die thermisch härtbaren Bindemittel, inklusive der thermisch und mit aktinischer Strahlung härtbaren, enthalten reaktive funktionelle Gruppen, die mit Gruppen ihrer Art, oder mit komplementären reaktiven funktionellen Gruppen thermische Vernetzungsreaktionen eingehen können. Im Falle der selbstvernetzenden Bindemittel sind diese reaktiven funktionelle Gruppen in den Bindemittel selbst enthalten. Im Falle der fremdvemetzenden Bindemittel ist mindestens eine Art der reaktiven funktionellen Gruppen in den Bindemitteln und die zu ihnen komplementären reaktiven funktionellen Gruppen in den Vernetzungsmitteln enthalten.

Beispiele geeigneter komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

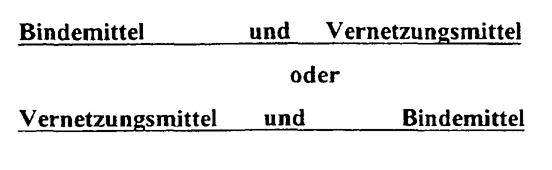

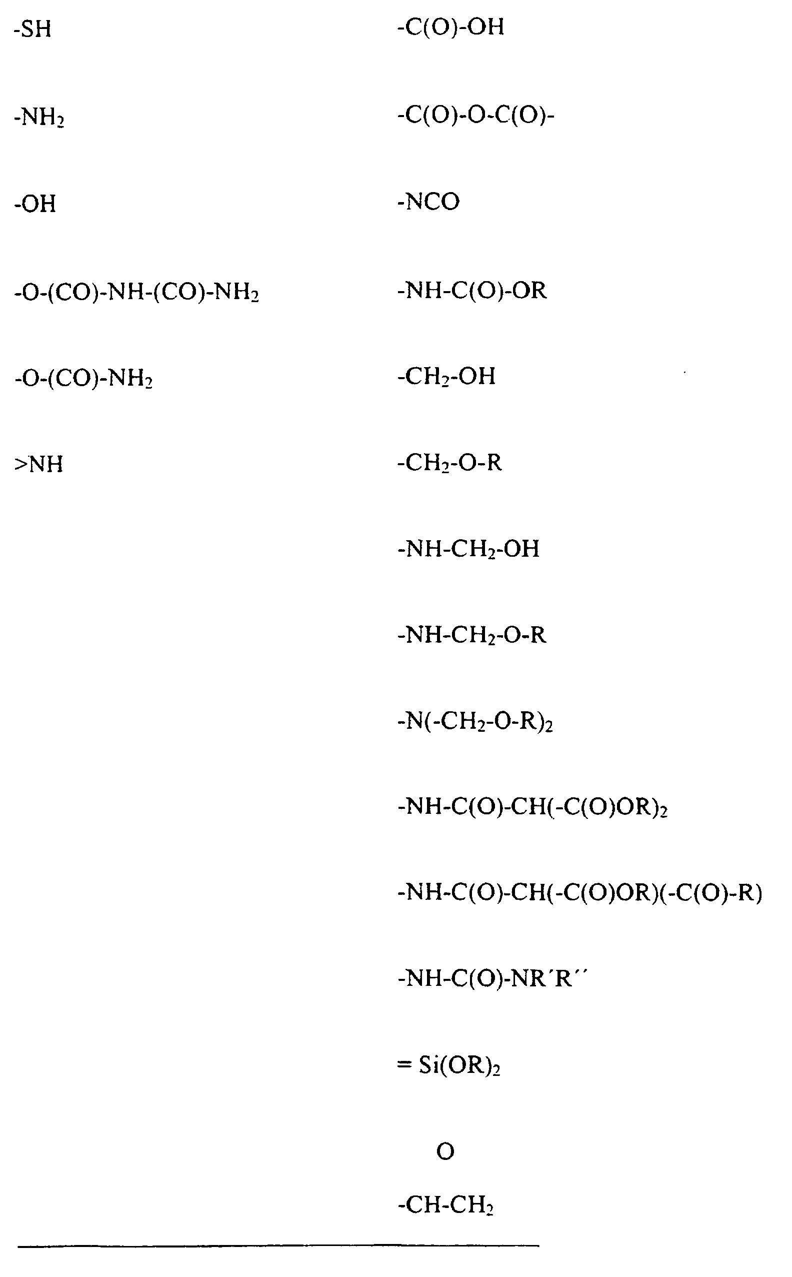

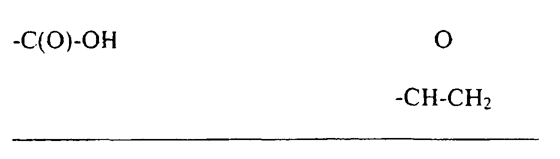

Die Auswahl der jeweiligen komplementären Gruppen richtet sich zum einen danach, daß sie bei der Lagerung erfindungsgemäßen Pulverslurries keine unerwünschten Reaktionen eingehen und/oder gegebenenfalls eine zusätzliche Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Pulverslurries Vemetzungstemperaturen von 100 bis 180 °C angewandt. Es werden daher in den Bindemittel vorzugsweise Thio-, Hydroxyl-, Methylol-, Methylolether, N-Methylol- N-Alkoxymethylamino-, Imino-, Carbamat-, Allophanat- und/oder Carboxygruppen, insbesondere aber Carboxygruppen oder Hydroxylgruppen, speziell Hydroxylgruppen, einerseits und Vernetzungsmittel mit Anhydrid-, Carboxy-, Epoxy-, blockierten Isocyanat-, Urethan-, Methylol-, Methylolether-, N-Methylol- N-Alkoxymethylamino-, Siloxan-, Amino-, Hydroxy- und/oder beta-Hydroxyalkylamidgruppen, insbesondere aber blockierte Isocyanatgruppen oder Epoxygruppen, andererseits angewandt. Für die Herstellung selbstvernetzender Bindemittel werden vorzugsweise Methylol-, Methylolether, N-Methylol- oder N-Alkoxymethylaminogruppen eingesetzt.

Die mit aktinischer Strahlung härtbaren Bindemittel, inklusive der Dual Cure-Bindemittel, enthalten Gruppen, die mindestens eine mit aktinischer Strahlung aktivierbare Bindung aufweisen, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbomenyl-, Isoprenyl-, Isopropenyl-, Allyl- oder Butenylestergruppen enthalten. Von diesen bieten die Acrylatgruppen ganz besondere Vorteile, weswegen sie besonders bevorzugt verwendet werden.

Beispiele für Bindemittel der vorstehend genannten Art, die mit besonderen Vorteil in den erfindungsgemäßen Pulverslurries eingesetzt werden können, werden beispielsweise in den Patentschriften DE 196 52 813 A 1, DE 196 18 657A 1, DE 196 13 547 A 1, DE 196 00 136 A 1, US 5,379,947 A 1, DE 42 03 278 A 1, EP 0 650 979 A 1, EP 0 299 420 A 1, DE 22 14 650 B 1, DE 27 49 576 B 1, US 4,091,048 A 1, US 3,781,379 A 1, DE 24 36 186 A 1, US 4, 064, 161A 1, US 4, 129, 488 A 1, EP 0 410 242 A 1, EP 0 585 742 A 1, EP 636 669 A 1, EP 0 650 978 A 1, EP 0 650 985 A 1 DE 44 13 436 A 1 oder DE 196 00 147 A 1 im Detail beschrieben.

Die Partikel der erfindungsgemäßen Pulverslurry können des weiteren Vernetzungsmittel enthalten, die die vorstehend beschriebenen reaktiven funktionellen Gruppen aufweisen. Beispiele hierfür sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben werden, Carboxylgruppen enthaltende Verbindungen oder Harze wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, und/oder Tris(alkoxycarbonylamino)triazine, wie sie in den Patentschriften US 4,939,213 A 1, US 5,084,541 A 1, US 5,288,865 A 1 oder EP 0 604 922 A 1 beschrieben werden.

Wenn sie mit verwendet werden, kann der Gehalt der Partikel der erfindungsgemäßen Pulverslurry an Vernetzungsmitteln breit variieren. Er richtet sich in erster Linie nach der Funktionalität der Bindemittel und nach der Vemetzungsdichte, die man in den aus den erfindungsgemäßen Pulverslurry hergestellten Beschichtungen erzielen will. Vorzugsweise werden die aus dem vorstehend aufgeführten Stand der Technik bekannten Mengen an Vernetzungsmitteln angewandt.

Die Partikel der erfindungsgemäßen Pulverslurry können des weiteren noch mindestens einen Zusatzstoff ausgewählt aus der Gruppe, bestehend aus farb- und/oder effektgebenden Pigmenten, organischen und anorganischen, transparenten oder opaken Füllstoffen, Nanopartikeln, thermisch und/oder mit aktinischer Strahlung härtbaren Reaktiverdünnern, Antioxidantien, UV-Absorbern, Lichtschutzmitteln, Radikalfängern, thermolabilen radikalischen Initiatoren, Katalysatoren für die thermische Vernetzung, Photoinitiatoren Entlüftungsmitteln, Slipadditiven, Polymerisationsinhibitoren, Entschäumern, Emulgatoren, Netz- und Dipergiermitteln, Haftvermittlern, Verlaufmitteln, filmbildenden Hilfsmitteln, rheologiesteuernden Additiven (Verdicker), Flammschutzmitteln, Sikkativen, Trockungsmitteln, Hautverhinderungsmitteln, Korrosionsinhibitoren, Wachsen, Bioziden, wäßrigen Dispersionen, insbesondere grobteiligen wäßrigen Dispersionen, von Vernetzungsmitteln und Mattierungsmitteln, enthalten.

Art und Menge der Zusatzstoffe richten sich nach dem Verwendungszweck der mit Hilfe des erfindungsgemäßen Verfahrens hergestellten Beschichtungen.

Dient die erfindungsgemäße Pulverslurry der Herstellung von Unidecklackierungen oder Basislackierungen, enthält sie farb- und/oder effektgebende Pigmente sowie gegebenenfalls opake Füllstoffe. Dient die erfindungsgemäße Pulverslurry dagegen der Herstellung von Klarlackierungen, was ihr besonders bevorzugter Verwendungszweck ist, sind diese Zusatzstoffe naturgemäß hierin nicht enthalten.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Beispiele geeigneter organischer und anorganischer Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasem, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Beispiele geeigneter thermisch härtbarer Reaktiverdünner sind stellungsisomere Diethyloctandiole oder Hydroxylgruppen enthaltende hyperverzweigte Verbindungen oder Dendrimere.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter Lichtschutzmittel sind HALS-Verbindungen, Benztriazole oder Oxalanilide.

Beispiele geeigneter thermolabiler radikalischer Initiatoren sind Dialkylperoxide, Hydroperoxide, Perester, Azodinitrile oder C-C-spaltende Initiatoren.

Beispiele geeigneter Katalysatoren für die Vernetzung sind Dibutylzinndilaurat, Dibutylzinnoxid, Lithiumdecanoat oder Zinkoctoat oder Phosphoniumsalze organischer oder anorganischer Säuren, wie sie beispielsweise in den Patentschriften US 3,477,990 A 1 oder US- 3,341,580 A 1 beschrieben werden, quarternäre Ammoniumverbindungen, Amine, Imidazol oder Imidazolderivate.

Beispiele geeigneter Entlüftunsmittel sind Diazadicycloundecan oder Benzoin.

Beispiele geeigneter Emulgatoren sind nicht ionische Emulgatoren, wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate.

Beispiele geeigneter transparenter Füllstoffe sind solche auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen.

Beispiel geeigneter rheologiesteuernder Additive sind die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane, wie sie beispielsweise in der Patentschrift DE 196 52 813 A 1 beschrieben werden, oder Polyacrylate.

Ein Beispiel für ein geeignetes Mattierungsmittel ist Magnesiumstearat.

Weitere Beispiele für die vorstehend aufgeführten Zusatzstoffe sowie Beispiele geeigneter UV-Absorber, Radikalfänger, Verlaufmittel, Flammschutzmittel, Sikkative, Trocknungsmittel, Hautverhinderungsmittel, Korrosionsinhibitoren, Biozide und Wachse werden in dem Lehrbuch »Lackadditive« von Johan Bieleman, Wiley-VCH, Weinheim, New York, 1998, im Detail beschrieben.

Die vorstehend beschriebenen Zusatzstoffe können auch in dem wäßrigen Medium enthalten sein, sofern sie sich hierfür ihrer üblichen und bekannten Funktion nach eignen. Für die erfindungsgemäße Pulverslurry ist es von Vorteil, wenn beispielsweise die Verdicker und/oder die Emulgatoren in dem wäßrigen Medium, d.h. im wesentlichen außerhalb der festen Partikel, vorliegen.

Für die Herstellung der erfindungsgemäßen Pulverslurry wird erfindungsgemäß mindestens ein Bindemittel aufgeschmolzen und im flüssigen Zustand einem Zahnkranz-Dispergieraggregat zugeführt, worin es in dem wäßrigen Medium emulgiert wird.

Die Temperatur der Schmelze kann sehr breit variieren und richtet sich nach der stofflichen Zusammensetzung der Bindemittel. Im allgemeinen werden Temperaturen angewandt, bei denen die Bindemittel nicht thermisch geschädigt werden. Vorzugsweise werden Temperaturen von 110 bis 200, bevorzugt 115 bis 180 und insbesondere 120 bis 160 °C angewandt. Dabei ist darauf zu achten, daß die Bindemittelschmelzen im Verlauf des erfindungsgemäßen Verfahrens wieder möglichst rasch abgekühlt werden, um die Gefahr der thermischen Schädigung möglichst gering zu halten. Der Fachmann kann daher das für den jeweiligen Einzelfall geeignete Temperatur-Zeit-Fenster aufgrund seines allgemeinen Fachwissens gegebenenfalls unter Zuhilfenahme orientierender Versuche in einfacher Weise bestimmen.

Wird zusätzlich mindestens ein Vernetzungsmittel und/oder mindestens ein Zusatzstoff zur Herstellung der erfindungsgemäßen Pulverslurry angewandt, werden alle Bestandteile getrennt voneinander aufgeschmolzen und dem Zahnkranz-Dispergieraggregat zugeführt, worin sie in dem wäßrigen Medium emulgiert werden.

In einer weiteren Variante des erfindungsgemäßen Verfahrens werden die Schmelzen der Bestandteile zunächst einem üblichen und bekannten statischen Mischer zugeführt und homogenisiert. Beispiele geeigneter Mischer sind solche vom Typ Sulzer, die von der Firma Sulzer Chemtech GmbH vertrieben werden.

Hinsichtlich des hierbei angewandten Temperatur-Zeit-Fensters gilt das vorstehend Gesagte sinngemäß, wobei als weitere Rahmenbedingung hinzutritt, daß die vorzeitige Reaktion der Bindemittel mit den Vernetzungsmitteln vermieden werden muß.

Erfindungsgemäß weist das Zahnkranz-Dispergieraggregat mindestens eine zylindrische Anordnung mindestens zweier auf Haltern sitzender, sich umschließender, relativ zueinander gegenläufig rotierbarer Zerkleinerungsorgankränze (Stator und Rotor) auf, wobei der sich durch die Relativbewegung zwischen dem Stator und Rotor ergebende Arbeitspalt Wände aufweist, die nicht-parallel zueinander verlaufen. Erfindungsgemäß ist es von Vorteil, wenn der Rotor im Sinne eines sich öffnenden Arbeitspaltes rotiert. Beispiele geeigneter erfindungsgemäß zu verwendender Zahnkranz-Dispergieraggregate werden in der Patentschrift EP 0 648 537 A 1 im Detail beschrieben. Sie werden unter dem Handelsnamen "K-Generatoren" von der Firma Kinematica AG, Luzern, Schweiz, vertrieben.

Nach dem Dispergieren wird die Emulsion rasch abgekühlt, so daß sich eine Suspension bildet. Hierbei werden vorzugsweise die in der DE 196 52 813 A 1, Spalte 8, Zeilen 9 bis 17, beschriebenen Methoden angewandt.

Durch die Abkühlung verfestigen sich die flüssigen Partikel, wodurch eine Suspension resultiert. Diese wird filtriert. Hierfür werden die üblichen und bekannten Filtrationsvorrichtungen und Filter verwendet, wie sie auch für die Filtration von bekannten Pulverslurries in Betracht kommen. Die Maschenweite der Filter kann breit variieren und richtet sich in erster Linie nach der Teilchengröße und der Teilchengrößenverteilung der Partikel der Suspension. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Die hiernach erhaltene erfindungsgemäße Pulverslurry dient der Herstellung von ein- und mehrschichtigen Klarlackierungen und farb- und/oder effektgebenden Lackierungen, insbesondere aber Klarlackierungen, auf grundierten oder ungrundierten Substraten.

Als Substrate kommen alle zu lackierenden Oberflächen, die durch eine Härtung der hierauf befindlichen Lackierungen unter Anwendung von Hitze und/oder aktinischer Strahlung nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist die erfindungsgemäße Pulverslurry auch für Anwendungen außerhalb der Kfzlackierung geeignet. Hierbei kommt es insbesondere für die Lackierung von Möbeln und die industrielle Lackierung, inklusive Coil Coating und Container Coating, in Betracht. Im Rahmen der industriellen Lackierung eignet sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen oder Emballagen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Im Falle von Metall kann das Substrat auch einer Oberflächenbehandlung, beispielsweise einer Galvanisierung oder einer Phosphatierung oder Eloxierung, unterzogen worden sein

Insbesondere in der Automobilserienlackierung wird zur Lackierung von Kraftfahrzeugkarosserien oder Teilen von Kraftfahrzeugkarosserien auf die vollständig ausgehärtete oder die lediglich getrocknete Elektrotauchlackierung (ETL) ein Füller oder eine Steinschlagschutzgrundierung appliziert. Diese Lackschicht wird entweder für sich alleine oder zusammen mit der darunter liegenden Elektrotauchlackschicht vollständig ausgehärtet. Die applizierte Füllerschicht kann auch lediglich getrocknet oder partiell ausgehärtet werden, wonach sie mit den darüber liegenden Lackschichten sowie gegebenenfalls mit der darunter liegenden Elektrotauchlackschicht vollständig ausgehärtet wird (erweiterte Naß-in-naß-Verfahren). Im Rahmen der vorliegenden Erfindung umfaßt der Begriff Grundierung auch die Kombination von Elektrotauchlackierung und Füllerlackierung oder Steinschlagschutzgrundierung.

Mit der erfindungsgemäßen Pulverslurry können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die erfindungsgemäße Pulverslurry kann zur Herstellung einschichtiger Lackierungen, insbesondere Klarlackierungen, direkt auf die vorstehend beschriebenen Substrate appliziert werden. Indes entfaltet die erfindungsgemäße Pulverslurry ihre besonderen Vorteile vor allem bei der Herstellung von mehrschichtige Lackierungen.

Zu diesem Zweck wird in einem ersten Verfahrenschritt ein physikalisch oder thermisch sowie gegebenenfalls mit aktinischer Strahlung härtbarer pigmentierter Basislack, insbesondere ein Wasserbasislack, auf das grundierte oder ungrundierte Substrat appliziert, wodurch die Basislackschicht resultiert. Bei dem pigmentierten Basislack kann es sich um eine erfmdungsgemäße Pulverslurry handeln. Erfindungsgemäß ist es indes von Vorteil, übliche und bekannte Basislacke, insbesondere Wasserbasislacke, zu verwenden.

Beispiele geeigneter Wasserbasislacke sind aus den Patentschriften EP 0 089 497 A 1, WO 97/49745 oder WO 97/49747 bekannt.

Die Applikation des Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Wasserbasislack selbst, betrieben wird.

Bevorzugt wird die Applikation bei Beleuchtung mit sichtbarem Licht einer Wellenlänge von über 550 µm oder unter Lichtausschluß durchgeführt, wenn der Wasserbasislack (auch) mit aktinischer Strahlung härtbar ist. Hierdurch werden eine stoffliche Änderung oder Schädigung des Wasserbasislacks und des Overspray vermieden.

Selbstverständlich können die vorstehend beschriebenen Applikationsmethoden auch bei der Herstellung der übrigen Lackschichten, insbesondere der Klarlackschichten, angewandt werden.

Nach ihrer Applikation wird die Wasserbasislackschicht physikalisch, thermisch oder thermisch und mit aktinischer Strahlung ausgehärtet. Wegen ihres hohen Gehalts an Pigmenten, die die aktinische Strahlung stark absorbieren und/oder streuen, wird die Wasserbasislackschicht physikalisch oder thermisch, vorzugsweise aber thermisch, gehärtet. Hierbei werden bevorzugt die nachfolgend beschriebenen Methoden der physikalischen Härtung oder der thermischen Härtung sowie gegebenenfalls ergänzt durch die nachfolgend beschriebenen Methoden der Härtung mit aktinischer Strahlung angewandt.

Die Härtung kann unmittelbar nach der Applikation der Wasserbasislackschicht erfolgen. Gegebenenfalls können hierbei die darunter liegenden, noch nicht vollständig ausgehärteten Lackschichten der Grundierung, insbesondere die Füllerschicht, mit ausgehärtet werden.

Die Wasserbasislackschicht wird vorzugsweise nicht ausgehärtet, sondern nur getrocknet oder partiell ausgehärtet. D. h., daß keine der vorhandenen zur Vernetzung befähigten funktionellen Gruppen umgesetzt werden oder nur ein Teil hiervon, etwa bis zu 90, vorzugsweise bis zu 80 und insbesondere bis zu 70 Mol-%, umgesetzt wird oder daß die physikalische Härtung noch nicht vollständig ist.

Die Wasserbasislackschicht oder die Wasserbasislackierung, insbesondere die Wasserbasislackschicht, wird mit einer Klarlackschicht aus der erfindungsgemäßen Pulverslurry überschichtet.

Im allgmeinen werden die Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Basislackierung liegt sie bei 5 bis 50, vorzugsweise 5 bis 40, besonders bevorzugt 5 bis 30 und insbesondere 10 bis 25 µm, und im Falle der Klarlackierung liegt sie bei 10 bis 100, vorzugsweise 15 bis 80, besonders bevorzugt 20 bis 75 und insbesondere 25 bis 70 µm.

In einer ersten bevorzugten Variante wird die erfindungsgemäße Klarlackschicht für sich alleine ausgehärtet. Die setzt voraus, daß die darunter liegenden Lackschichten bereits vollständig ausgehärtet sind.

In einer zweiten bevorzugten, Variante wird die erfindungsgemäße Klarlackschicht gemeinsam mit der Basislackschicht sowie gegebenenfalls mit der darunterliegenden Füllerschicht ausgehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Klarlackschicht und zum Verdunsten von flüchtigen Bestandteilen wie Wasser. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

In einer ersten bevorzugten Variante erfolgt die Aushärtung der Klarlackschicht alleine mit aktinischer Strahlung, wobei vorteilhafte technische Effekte resultieren, wenn hierbei keine Photoinitiatoren im Klarlack angewandt werden. Vorzugsweise ist bei dieser Variante die Wasserbasislackschicht bereits vollständig oder zumindest partiell ausgehärtet.

In einer zweiten bevorzugten Variante erfolgt die Aushärtung der Klarlackschicht thermisch und mit aktinischer Strahlung. Vorzugsweise ist bei dieser Variante die Wasserbasislackschicht nicht oder nur partiell ausgehärtet.

In einer dritten bevorzugten Variante erfolgt die Aushärtung der Klarlackschicht physikalisch, gegebenenfalls unterstützt durch Hitze und/oder aktinische Strahlung. Vorzugsweise ist bei dieser Variante die Wasserbasislackschicht partiell oder vollständig ausgehärtet

In einer vierten bevorzugten Variante erfolgt die Aushärtung der Klarlackschicht alleine thermisch. Vorzugsweise ist bei dieser Variante die Wasserbasislackschicht sowie gegebenenfalls die Füllerschicht nicht oder nur partiell ausgehärtet.

Vorzugsweise wird die Härtung mit aktinischer Strahlung mit UV-Strahlung und/oder Elektronenstrahlen durchgeführt. Vorzugsweise wird hierbei eine Dosis von 1.000 bis 2.000, bevorzugt 1.100 bis 1.900, besonders bevorzugt 1.200 bis 1.800, ganz besonders bevorzugt 1.300 bis 1.700 und insbesondere 1.400 bis 1.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Klarlackschicht I gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR- oder mit NIR(nahes Infrarot)-Lampen.

Wie bei der Härtung mit aktinischer Strahlung kann auch die thermische Härtung stufenweise erfolgen. Vorteilhafterweise erfolgt die thermische Härtung bei Temperaturen oberhalb 100 °C. Im allgemeinen empfiehlt es sich, hierbei Temperaturen von 180 °C, vorzugsweise 170 °C und insbesondere 155 °C nicht zu überschreiten.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Selbstverständlich können die vorstehend beschriebenen Härtungsmethoden im Rahmen des erfindungsgemäßen Verfahrens auch zur Härtung der übrigen Lackschichten angewandt werden.

Die resultierende erfindungsgemäße farb- und/oder effektgebende Mehrschichtlackierung kann noch mit einer Schicht aus einem organisch modifizierten Keramikmaterial, wie es beispielsweise unter der Marke Ormocer® im Handel erhältlich ist, beschichtet werden.

Es erweist sich somit als ein besonderer Vorteil der erfindungsgemäßen Pulverslurry, daß sie zusätzlich zu ihrer eleganten und energiesparenden Herstellweise außerordentlich breit angewandt werden kann. Die hiermit hergestellten erfindungsgemäßen ein- oder mehrschichtigen Lackierungen weisen eine sehr gute Haftung an den Substraten und eine sehr gute Zwischenschichthaftung, eine hohe Chemikalienbeständigkeit und Witterungsbeständigkeit sowie einen hervorragenden optischen Gesamteindruck auf. Die mit diesen Lackierungen beschichteten grundierten oder ungrundierten Substrate haben daher eine besonders hohe Gebrauchsdauer und einen besonders hohen Gebrauchswert, was sie für Hersteller, Anwender und Endverbraucher technisch und wirtschaftlich ganz besonders attraktiv macht.

### Beispiele

### Herstellbeispiel

### Die Herstellung eines hydroxyfunktionellen Polyacrylatharzes

In einem geeigneten Reaktionsgefäß wurden 40 Gewichtsteile Xylole vorgelegt und auf 130 °C erwärmt. Zu dieser Vorlage wurden bei 130 °C während 4 Stunden über zwei getrennte Zuläufe zum einen eine Initiatorlösung aus 10 Gewichtsteilen tert.-Butylperethylhexanoat und 10 Gewichtsteilen Xylol und zum anderen eine Monomerenmischung aus 25 Gewichtsteilen Styrol, 21 Gewichtsteilen n-Butylmethacrylat, 26 Gewichtsteilen Methylmethacrylat und 28 Gewichtsteilen 2-Hydroxypropylmethacrylat gleichmäßig unter Rühren zudosiert. Die resultierende Reaktionsmischung wurde auf 160 °C, und das Lösemittel wurde bei 100 mbar vollständig abdestilliert. Die resultierende heiße Schmelze des Bindemittels wurde aus dem Reaktionsgefäß abgelassen. Nach dem Abkühlen auf Raumtemperatur erhielt man einen farblosen Feststoff.

### Beispiel 1

### Die Herstellung einer erfindungsgemäßen Pulverslurry

In einem ersten Behälter wurde ein handelsübliches, mit 3,5-Dimethylpyrazol blockiertes Polyisocyanat auf der Basis von Isophorondiisocyanat mit einer NCO-Gehalt von 15,5 Gew.-% vorgelegt.

In einem zweiten Behälter wurden 56,07 Gewichtsteile des Bindemittels gemäß dem Herstellbeispiel, 2 Gewichtsteile eines handelsüblichen UV-Absorbers (Tinuvin® 1130 der Firma Ciba Additive GmbH), 0,9 Gewichtsteile eines handelsüblichen HALS (Tinuvin® 144 der Firma Ciba Additive GmbH), 0,4 Gewichtsteile eines handelsüblichen Verlaufmittels (Additol® XL 490), 0,4 Gewichtsteile Benzoin und 0,5 Gewichtsteile Dibutylzinnoxid vorgelegt.

Der Inhalt der beiden Behälter wurde auf 139 °C erwärmt. Bei dieser Temperatur resultieren Schmelzen, deren Viskosität von 10 mPas eine weitere Bearbeitung, insbesondere eine Förderung, erlaubt.

Vor der Förderung der Schmelzen durch die Anlage mit dem erfindungsgemäß zu verwendenden Zahnkranz-Dispergieraggregat ("K-Generator" der Firma Kinematica AG, Luzem, Schweiz) wurde die gesamte Anlage mit Dampf auf 139 °C erwärmt. Hiernach wurden die beiden Schmelzen über getrennte, beheizte Zuleitungen mit volumetrisch fördernden Pumpen in einen statischen Sulzer-Mischer dosiert. Über den Volumenstrom der Pumpen wurde ein stöchiometrisches Verhältnis von blockierten Isocyanatgruppen zu Hydroxylgruppen eingestellt. In dem statischen Mischer wurden die beiden Schmelzen innerhalb sehr kurzer Zeit (< 5,0 s) molekulardispers gemischt. Die resultierende homogene Schmelze, die noch immer eine Temperatur oberhalb des Schmelzpunkts der Bestandteile aufwies, wurde über ein Injektorrohr in die Voremulgierzone des Zahnkranz-Dispergieraggregats gefördert.

In der Voremulgierzone wurde eine wäßrige Lösung, bestehend aus 61 Gewichtsteilen deionisiertem Wasser, 1,6 Gewichtsteilen eines handelsüblichen Dispergierhilfsmittels (Orotan® 731 K der Firma Rohm & Haas), 0,2 Gewichtsteile eines handelsüblichen Entschäumers (Troykyd® der Firma Troy Chemie GmbH) und 0,4 Gewichtsteile eines handelsüblichen Netzmittels (Surfinol® TMN 6 der Firma Air Products & Chemicals) mit einer volumetrisch fördernden Pumpe zudosiert. Die wäßrige Lösung war vor der Dosierung in einem druckbeständigen Behälter auf die Prozeßtemperatur erwärmt worden.

Durch Energieeintrag mit einem ersten Rotor-Stator-System des Zahnkranz-Dispergieraggregats wurde eine Voremulsion erzeugt, in der die wäßrige Lösung die kontinuierliche Phase bildete. Die Voremulsion wurde in einer weiteren Zone des Zahnkranz-Dispergieraggregats bei einem Energieeintrag zwischen 10⁷ und 10⁸ J/m³ auf eine mittlere Teilchengröße zwischen 1 und 3 µm zerkleinert. Der Energieeintrag des Rotor-Stator-Systems wurde über die Spaltbreite des Arbeitsspalts zwischen Rotor und Stator, durch die Geometrie der Zähne des jeweiligen Rotors und Stators sowie die Drehzahl eingestellt.

Nach der Dispergierung wurde die Emulsion durch Einspritzen von kaltem deionisiertem Wasser rasch abgekühlt. Insgesamt sind die Mengen an deionisiertem Wasser zur Voremulgierung und zur Abkühlung so bemessen, daß die resultierende Suspension einen Festkörpergehalt von 35 Gew.-%, bezogen auf die Suspension, aufwies.

Die Suspension wurde noch mit 1,8 Gewichtsteilen eines handelsüblichen Verdickers (Acrysol® RM8 der Firma Rohm & Haas) versetzt und durch einen 50 µm Filter filtriert.

### Beispiel 2

### Die Herstellung einer erfindungsgemäßen Mehrschichtlackierung

Für die Herstellung der erfindungsgemäßen Mehrschichtlackierung wurden in üblicher und bekannter Weise Prüftafeln der Abmessungen 10 cm x 20 cm hergestellt. Hierzu wurden Stahltafeln (Karosseriebleche), die mit einer üblichen und bekannten kathodisch abgeschiedenen und eingebrannten Elektrotauchlackierung (KTL) beschichtet waren, mit einem handelsüblichen Dünnschichtfüller (Ecoprime® der Firma BASF Coatings AG) beschichtet, wonach die resultierende Füllerschicht während fünf Minuten bei 20 °C und einer relativen Luftfeuchtigkeit von 65% abgelüftet und in einem Umluftofen während fünf Minuten bei 80 °C getrocknet wurde. Hiernach wiesen die Füllerschichten eine Trockenschichtdicke von 15µm auf.

Nach dem Abkühlen der Prüftafeln auf 20 °C wurde ein handelsüblicher Wasserbasislack (Ecostar® der Firma BASF Coatings AG) appliziert, während fünf Minuten bei 20 °C und einer relativen Luftfeuchtigkeit von 65% abgelüftet und in einem Umluftofen während fünf Minuten bei 80 °C getrocknet, so daß die getrockneten Basislackschichten eine Trockenschichtdicke von etwa 15 µm aufwiesen.

Nach dem erneuten Abkühlen der Prüftafeln auf 20 °C wurden die Basislackschichten mit der erfindungsgemäßen Pulverslurry gemäß dem Beispiel 1 überschichtet. Die resultierende Pulverslurry-Klarlackschichten wurden während 3 Minuten bei 20 °C und einer relativen Luftfeuchtigkeit von 65% abgelüftet und in einem Umluftofen während 5 Minuten bei 60 °C getrocknet.

Nach der Applikation aller drei Schichten wurden sie gemeinsam während 30 Minuten bei 155 °C eingebrannt, wodurch die erfindungsgemäße Mehrschichtlackierung resultierte. Ihre Klarlackierung wies eine Schichtdicke von 40 µm auf. Sie war hoch glänzend und von einer hervorragenden Lösemittelbeständigkeit (mehr als 100 Doppelhübe im Methylethylketon-Test ohne Beschädigung) und einer guten Schwitzwasserbeständigkeit. Die Zwischenschichthaftung war sehr gut.

## Patentansprüche

1. Verfahren zur Herstellung einer wäßrigen Pulverlackdispersion (Pulverslurry), bei dem man
(1) mindestens ein Bindemittel in flüssigem Zustand in einem Zahnkranz-Dispergieraggregat in einem wäßrige Medium emulgiert,
(2) die resultierende Emulsion abkühlen läßt, so daß sich eine Suspension bildet, und
(3) die Suspension filtriert,
wobei das verwendete Zahnkranz-Dispergieraggregat mindestens eine zylindrische Anordnung mindestens zweier auf Haltern sitzender, sich umschließender, relativ zueinander gegenläufig rotierbarer Zerkleinerungsorgankränze (Stator und Rotor) aufweist, wobei der sich durch die Relativbewegung zwischen dem Stator und Rotor ergebende Arbeitsspalt Wände aufweist, die nicht-parallel zueinander verlaufen.

2. Verfahren nach Anspruch 1, **dadurch gekennzeichnet, daß** der Rotor im Sinne eines sich öffnenden Arbeitsspaltes rotiert.

3. Verfahren nach Anspruch 1 oder 2, **dadurch gekennzeichnet, daß** das Bindemittel mit mindestens einem Vernetzungsmittel vermischt wird.

4. Verfahren nach einem der Ansprüche 1 bis 3, **dadurch gekennzeichnet, daß** das Bindemittel noch mit mindestens einem Zusatzstoff vermischt wird.

5. Verfahren nach Anspruch 4, **dadurch gekennzeichnet, daß** das Bindemittel sowie das Vernetzungsmittel und/oder der Zusatzstoff vor dem Eintritt in das Zahnkranz-Dispergieraggregat in flüssigem Zustand miteinander vermischt werden.

6. Verfahren nach einem der Ansprüche 1 bis 5, **dadurch gekennzeichnet, daß** die wäßrige Pulverlackdispersion physikalisch härtend ist.

7. Verfahren nach einem der Ansprüche 1 bis 5, **dadurch gekennzeichnet, daß** die wäßrige Pulverlackdispersion thermisch und/oder mit aktinischer Strahlung härtbar ist.

8. Verfahren nach Anspruch 7, **dadurch gekennzeichnet, daß** die wäßrige Pulverlackdispersion thermisch selbstvernetzend oder fremdvemetzend ist.

9. Verwendung der gemäß einem der Ansprüche 1 bis 8 hergestellten wäßrigen Pulverlackdispersionen für die Herstellung ein- oder mehrschichtiger Klarlakkierungen oder farb- und/oder effektgebender Lackierungen auf grundierten und ungrundierten Substraten.

10. Verwendung nach Anspruch 9, **dadurch gekennzeichnet, daß** es sich bei den Substraten um Kraftfahrzeugkarosserien, Teile von Kraftfahrzeugkarosserien, Kunststoffe, Möbel und industrielle Bauteile, inklusive Coils und Container, handelt.

## Claims

1. A process for preparing an aqueous powder coating dispersion (powder slurry) by
(1) emulsifying at least one binder in the liquid state in a toothed-ring dispersing apparatus in an aqueous medium,
(2) causing the resulting emulsion to cool, so that a suspension is formed, and
(3) filtering the suspension,
wherein the toothed-ring dispersing apparatus used comprises at least one cylindrical arrangement of at least two comminutor rings (stator and rotor) which are seated on holders, are in mutual embrace, and are rotatable in opposite directions relative to one another, the working gap produced by the relative movement between stator and rotor having walls which extend nonparallelwise with respect to one another.

2. The process as claimed in claim 1, wherein the rotor rotates in the direction of an opening working gap.

3. The process as claimed in claim 1 or 2, wherein the binder is mixed with at least one crosslinking agent.

4. The process as claimed in any of claims 1 to 3, wherein the binder is further mixed with at least one additive.

5. The process as claimed in claim 4, wherein the binder and also the crosslinking agent and/or the additive are mixed with one another in the liquid state before entering the toothed-ring dispersing apparatus.

6. The process as claimed in any of claims 1 to 5, wherein the dispersion is physically curing.

7. The process as claimed in any of claims 1 to 5, wherein the dispersion is curable thermally and/or with actinic radiation.

8. The process as claimed in claim 7, wherein the dispersion is thermally self-crosslinking or externally crosslinking.

9. The use of a dispersion prepared as claimed in any of claims 1 to 8 to produce single-coat or multicoat clearcoat systems or color and/or effect coating systems on primed and unprimed substrates.

10. The use as claimed in claim 9, wherein the substrates comprise motor vehicle bodies, parts of motor vehicle bodies, plastics, furniture, and industrial components, including coils and containers.

## Revendications

1. Procédé pour la préparation d'une dispersion (*slurry*) aqueuse de peinture en poudre, dans lequel
(1) dans un appareil de dispersion à couronnes dentées, on émulsionne dans un milieu aqueux au moins un liant à l'état liquide,
(2) on laisse refroidir l'émulsion résultante, de sorte qu'il se forme une suspension, et
(3) on filtre la suspension,
l'appareil de dispersion à couronnes dentées, utilisé, comportant au moins un système cylindrique d'au moins deux couronnes à organes de fragmentation contrarotatives l'une par rapport à l'autre, s'entourant (stator et rotor), reposant sur des supports, l'interstice de travail formé par le mouvement relatif entre le stator et le rotor présentant des parois qui ne sont pas parallèles entre elles.

2. Procédé selon la revendication 1, **caractérisé en ce que** le rotor tourne dans le sens d'un interstice de travail s'ouvrant.

3. Procédé selon la revendication 1 ou 2, **caractérisé en ce que** le liant est mélangé avec au moins un agent de réticulation.

4. Procédé selon l'une quelconque des revendications 1 à 3, **caractérisé en ce que** le liant est mélangé encore avec au moins un additif.

5. Procédé selon la revendication 4, **caractérisé en ce que** le liant ainsi que l'agent de réticulation et/ou l'additif sont mélangés l'un avec l'autre à l'état liquide avant l'entrée dans l'appareil de dispersion à couronnes dentées.

6. Procédé selon l'une quelconque des revendications 1 à 5, **caractérisé en ce que** la dispersion aqueuse de peintures en poudre est durcie physiquement.

7. Procédé selon l'une quelconque des revendications 1 à 5, **caractérisé en ce que** la dispersion aqueuse de peinture en poudre est durcissable thermiquement et/ou par un rayonnement actinique.

8. Procédé selon la revendication 7, **caractérisé en ce que** la dispersion aqueuse de peinture en poudre est autoréticulable thermiquement ou réticulable à l'aide d'un agent de réticulation.

9. Utilisation des dispersions aqueuses de peinture en poudre préparées selon l'une quelconque des revendications 1 à 8, pour la production de revêtements de vernis ou de revêtements de peintures colorantes et/ou à effet, mono- ou multicouches, sur des subjectiles munis ou non d'un primaire.

10. Utilisation selon la revendication 9, **caractérisée en ce que** les subjectiles consistent en des carrosseries d'automobiles, des pièces de carrosseries d'automobiles, des meubles et des composants industriels, y compris des rubans continus et des récipients.
